# EUROPEAN PATENT APPLICATION

(11) **EP 1 426 435 A1**
(43) Date of publication of application: **09.06.2004**
(21) Application number: 03257279.4
(22) Date of filing: 18.11.2003
(51) Int. Cl.: C10L 1/00, C10M 171/00

(54) **Method for marking liquid petroleum hydrocarbons**

(30) Priority: 04.12.2002 US 430951 P
(71) Applicant: ROHM AND HAAS COMPANY, Philadelphia Pennsylvania 19105 (US)
(72) Inventor: Ho, Kim Sang, Richboro Pennsylvania 18954 (US)
(74) Representative: Kent, Venetia Katherine

(57) **Abstract**

A method for marking a liquid petroleum hydrocarbon; said method comprising adding to said liquid petroleum hydrocarbon at least one dye having an unsaturated cyclic nucleus comprising at least nine ring atoms, and having at least one (CN)₂C= substituent and at least one Ar-N= substituent; wherein Ar is a substituted aryl group.

## Description

This invention relates generally to a method for marking a petroleum hydrocarbon with at least one dye for subsequent identification.

Dyes containing (CN)₂C= and Ar-N= substituents on an unsaturated cyclic nucleus are disclosed in K.A. Bello et al., J. Chem. Soc. Perkin Trans. II, 1987, pp. 815-818. This reference, however, does not suggest a method for marking petroleum hydrocarbons.

The problem addressed by this invention is to find additional compounds having an absorption maximum of at least 600 nm which are useful for marking petroleum hydrocarbons.

### STATEMENT OF THE INVENTION

This invention is directed to a method for marking a liquid petroleum hydrocarbon; said method comprising adding to said liquid petroleum hydrocarbon at least one dye having an unsaturated cyclic nucleus comprising at least nine ring atoms, and having at least one (CN)₂C= substituent and at least one Ar-N= substituent; wherein Ar is a substituted aryl group.

### DETAILED DESCRIPTION OF THE INVENTION

All percentages are weight percentages, unless otherwise indicated. Concentrations in parts per million ("ppm") are calculated on a weight/volume basis. The term "petroleum hydrocarbons" refers to products having a predominantly hydrocarbon composition, although they may contain minor amounts of oxygen, nitrogen, sulfur or phosphorus, that are derived from petroleum refining processes, preferably lubricating oil, hydraulic fluid, brake fluid, gasoline, diesel fuel, kerosene, jet fuel and heating oil. An "alkyl" group is a hydrocarbyl group having from one to twenty carbon atoms in a linear, branched or cyclic arrangement. Alkyl groups optionally have one or more double or triple bonds. Substitution on alkyl groups of one or more halo, cyano, hydroxy, alkoxy, alkanoyl or aroyl groups is permitted. Preferably, alkyl groups have no halo or alkoxy substituents. An "alkoxy" group is an alkyl group linked via an oxygen atom, i.e., a hydroxy group substituted by an alkyl group. A "heteroalkyl" group is an alkyl group having at least one carbon which has been replaced by O, NR, or S, wherein R is hydrogen, alkyl, heteroalkyl, aryl or aralkyl. An "aryl" group is a substituent derived from an aromatic hydrocarbon compound. An aryl group has a total of from six to twenty ring atoms, and has one or more rings which are separate or fused. An "aralkyl" group is an "alkyl" group substituted by an "aryl" group. A "heterocyclic" group is a substituent derived from a heterocyclic compound having from five to twenty ring atoms, at least one of which is nitrogen, oxygen or sulfur. Preferably, heterocyclic groups do not contain sulfur. A substituted aryl or substituted heterocyclic group has one or more substituents selected from halo, hydroxy, amino, cyano, nitro and organic functional groups; preferably, substitution on aryl or heterocyclic groups is limited to amino, alkylamino, dialkylamino, alkanoylamino, halo, cyano, nitro, hydroxy, alkyl, heteroalkyl, alkanoyl, aroyl or alkoxy groups. Preferably, aryl and heterocyclic groups do not contain halogen atoms. An "aromatic heterocyclic" group is a heterocyclic group derived from an aromatic heterocyclic compound.

An "organic functional group" is a functional group which does not contain metal atoms, and which has from one to twenty-two carbon atoms, hydrogen atoms, and optionally heteroatoms, including but not limited to: nitrogen, oxygen, sulfur, phosphorus, silicon and halogen atoms. An organic functional group optionally contains double and/or triple bonds; rings, which are linked or fused; and if the group is wholly or partly acyclic, the acyclic part can be linear or branched.

Preferably, the substituted aryl group, Ar, of the Ar-N= substituent is substituted phenyl, substituted naphthyl, substituted anthracenyl, substituted benzofuranyl or substituted benzopyrrolyl. More preferably, the aryl group is substituted phenyl or substituted naphthyl. Preferably, the substituents on the substituted phenyl or substituted naphthyl group are selected from amino, hydroxy and organic functional groups. Most preferably, the aryl group is substituted phenyl, and the Ar-N= substituent has formula (I) 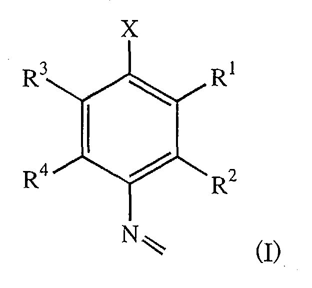 wherein X is amino, substituted amino, hydroxy or alkoxy; and R¹, R², R³ and R⁴ independently are selected from hydrogen, amino, hydroxy, halo and organic functional groups. Substituted amino groups are amino groups in which one or both hydrogen atoms have been replaced by alkyl, alkanoyl, aryl or aralkyl groups; when both hydrogen atoms have been replaced, the groups are selected independently. Preferably, R¹, R², R³ and R⁴ independently are selected from hydrogen, alkyl, amino, substituted amino, hydroxy and alkoxy. Most preferably, X is NR¹⁴R¹⁵, wherein R¹⁴ and R¹⁵ independently are hydrogen or alkyl. More preferably, at least one of R¹⁴ and R¹⁵ is alkyl, and most preferably both of R¹⁴ and R¹⁵ are alkyl. Preferably, R¹⁴ and R¹⁵ independently are selected from among the C₄-C₂₀ alkyl groups. In one preferred embodiment of the invention, R¹ and R³ are hydrogen and at least one of R² and R⁴ is amino, substituted amino, hydroxy or alkoxy. In another preferred embodiment, R¹, R², R³ and R⁴ are hydrogen.

Preferably, the unsaturated cyclic nucleus has from nine to fourteen ring atoms. More preferably, the unsaturated cyclic nucleus is selected from among 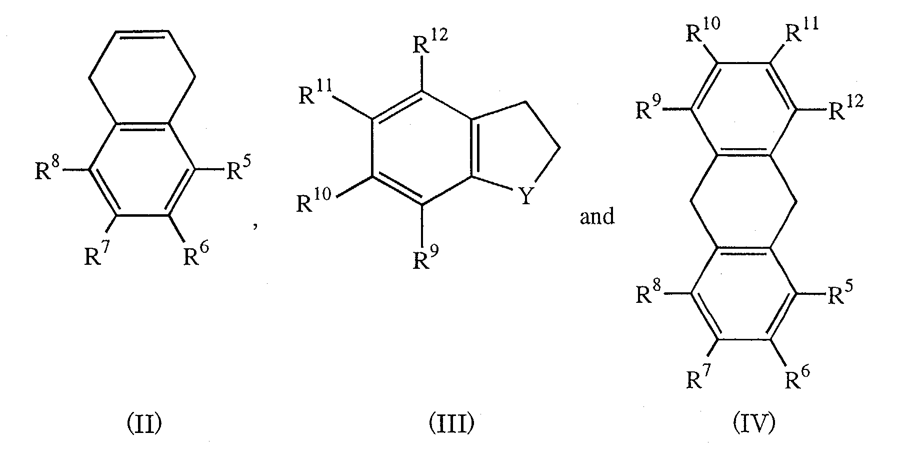 wherein Y is CH₂, NR¹³ or O; and R⁵, R⁶, R7, R8, R⁹, R¹⁰, R¹¹, R¹² and R¹³ independently are selected from hydrogen, halo, cyano, nitro and organic functional groups. Preferably, R⁵, R⁶, R⁷, R8, R9, R¹⁰, R¹¹, R¹² and R¹³ independently are hydrogen, alkyl, halo, cyano or nitro. The (CN)₂C= substituent(s) and substituent(s) of formula (I) are attached to any saturated carbon in the cyclic nuclei depicted above. Preferably, Y is CH₂. Preferably, the cyclic unsaturated nucleus has nine or ten ring carbon atoms and, with (CN)₂C= and Ar-N= substituents attached, comprises an aromatic ring system.

Preferably, each dye according to this invention is selected from among 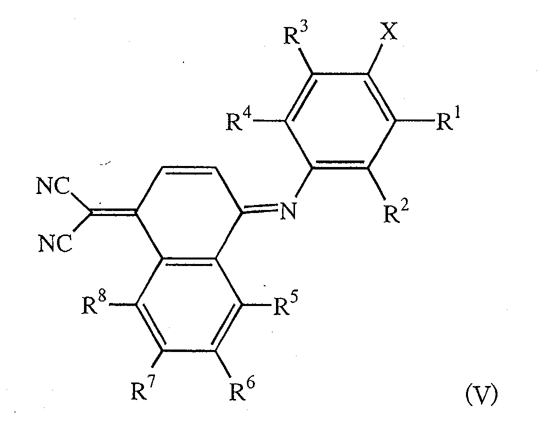 and 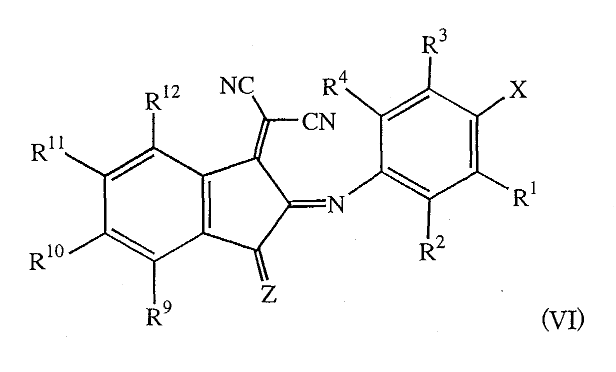 wherein Z represents O or C(CN)₂. Preferably, in the second structure above, Z represents C(CN)₂, giving this dye the following structure (VII)

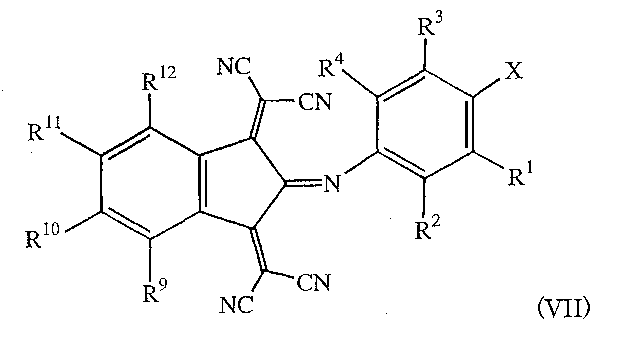

Preferably, R⁵, R⁶, R⁷, R⁸, R⁹, R¹⁰, R¹¹ and R¹² independently are hydrogen or alkyl. Most preferably, R⁵, R⁶, R⁷, R⁸, R⁹, R¹⁰, R¹¹ and R¹² are hydrogen.

Preferably the amount of each dye which is added to the petroleum hydrocarbon is at least 0.01 ppm, more preferably at least 0.02 ppm, and most preferably at least 0.03 ppm. Preferably the amount of each dye is less than 10 ppm, more preferably less than 2 ppm, and most preferably less than 1 ppm. Preferably, the marking is invisible, i.e., the dye cannot be detected by simple visual observation of the marked hydrocarbon. Preferably, a dye used in the method of this invention, having an unsaturated cyclic nucleus comprising at least nine ring atoms, and having at least one (CN)₂C= substituent and at least one Ar-N= substituent, has an absorption maximum in the range from 600 nm to 1000 nm. Preferably, it has an absorption maximum at a wavelength of at least 650 nm, more preferably at least 700 nm, more preferably at least 720 nm and most preferably at least 750 nm; preferably, the absorption maximum is no greater than 900 nm, more preferably no greater than 875 nm. In one embodiment, at least two dyes according to the method of this invention, and having absorption maxima at differential wavelengths are added to the petroleum hydrocarbon. In another embodiment, at least one dye according to the method of this invention and at least one other dye having an absorption maximum in the range from 600 nm to 1000 nm, preferably from 700 nm to 1000 nm, are added to the petroleum hydrocarbon. Preferably, each of the other dyes absorbing in this range is present in an amount of at least 0.01 ppm, more preferably at least 0.02 ppm, and most preferably at least 0.03 ppm. Preferably the amount of each other dye is less than 10 ppm, more preferably less than 2 ppm, and most preferably less than 1 ppm.

Preferably, a dye used in the method of this invention is detected by exposing the marked petroleum hydrocarbon to electromagnetic radiation having wavelengths in the portion of the spectrum containing the absorption maxima of the dye and detecting the absorption of light or fluorescent emissions. It is preferred that the detection equipment is capable of calculating dye concentrations and concentration ratios in a marked petroleum hydrocarbon. Typical spectrophotometers known in the art are capable of detecting the dyes used in the method of this invention when they are present at a level of at least 0.01 ppm. It is preferred to use the detectors described in U.S. Pat. No. 5,225,679, especially the SpecTrace™ analyzer available from Rohm and Haas Company, Philadelphia, PA. These analyzers use a filter selected based on the absorption spectrum of the dye, and use chemometric analysis of the signal by multiple linear regression methods to reduce the signal-to-noise ratio.

When the detection method does not involve performing any chemical manipulation of the marked petroleum hydrocarbon, the sample may be returned to its source after testing, eliminating the need for handling and disposal of hazardous chemicals. This is the case, for example, when the dyes are detected simply by measuring light absorption or fluorescence of a sample of the marked petroleum hydrocarbon.

In one embodiment of the invention, the dye is formulated in a solvent to facilitate its addition to the liquid petroleum hydrocarbon. The preferred solvents for the dyes are aromatic hydrocarbon solvents. Preferably, the dye is present in the solvent at a concentration of from 0.1% to 10%.

In one embodiment of the invention, at least one dye having an unsaturated cyclic nucleus comprising at least nine ring atoms, and having at least one (CN)₂C= substituent and at least one Ar-N= substituent, and having an absorption maximum from 700 nm to 1000 nm, and optionally another dye having an absorption maximum from 700 nm to 1000 nm, are added to a petroleum hydrocarbon with at least one visible dye; i.e., a dye having an absorption maximum in the range from 500 nm to 700 nm, preferably from 550 nm to 700 nm, and most preferably from 550 nm to 680 nm. Preferably, each visible dye is added in an amount of at least 0.1 ppm, preferably at least 0.2 ppm, and most preferably at least 0.5 ppm. Preferably, the amount of each visible dye is no more than 10 ppm, more preferably no more than 5 ppm, more preferably no more than 3 ppm, and most preferably no more than 2 ppm. In a preferred embodiment, the visible dyes are selected from the classes of anthraquinone dyes and azo dyes. Suitable anthraquinone dyes having an absorption maximum in this region include, for example, 1,4-disubstituted anthraquinones having alkylamino, arylamino or aromatic-heterocyclic-amino substituents. Suitable azo dyes having an absorption maximum in this region include the bisazo dyes, for example, those having the structure Ar-N=N-Ar-N=N-Ar, in which Ar is an aryl group, and each Ar may be different. Specific examples of suitable commercial anthraquinone and bisazo dyes having an absorption maximum in this region are listed in the Colour Index, including C.I. Solvent Blue 98, C.I. Solvent Blue 79, C.I. Solvent Blue.99 and C.I. Solvent Blue 100.

Incorporation of at least one dye having an unsaturated cyclic nucleus comprising at least nine ring atoms, and having at least one (CN)₂C= substituent and at least one Ar-N= substituent, and having an absorption maximum in the region from 600 nm to 1000 nm allows identification of the liquid hydrocarbon by spectrophotometric means in a spectral region relatively free of interference. Low levels of these dyes are detectable in this region, allowing for a cost-effective marking process, and availability of multiple dyes allows coding of information via the amounts and ratios of the dyes. For these reasons, additional compounds absorbing in this range, and suitable as fuel markers, are extremely useful.

Combinations of markers detectable at 700 nm to 1000 nm with markers detectable in the visible range also are useful. Incorporation of higher levels of at least one visible dye having an absorption maximum in the region from 500 nm to 700 nm facilitates quantitative spectrophotometric determination in this region. Accurate determination of the dye levels allows the amounts and ratios of the dyes to serve as parts of a code identifying the hydrocarbon. Since dyes absorbing in this region often are less costly, use of a higher level will not greatly increase the overall cost of the marking process. Thus, the combination of the two kinds of dyes increases the flexibility and minimizes the cost of the marking process.

## Claims

1. A method for marking a liquid petroleum hydrocarbon; said method comprising adding to said liquid petroleum hydrocarbon at least one dye having an unsaturated cyclic nucleus comprising at least nine ring atoms, and having at least one (CN)₂C= substituent and at least one Ar-N= substituent; wherein Ar is a substituted aryl group.

2. The method of claim 1 in which the unsaturated cyclic nucleus is selected from among 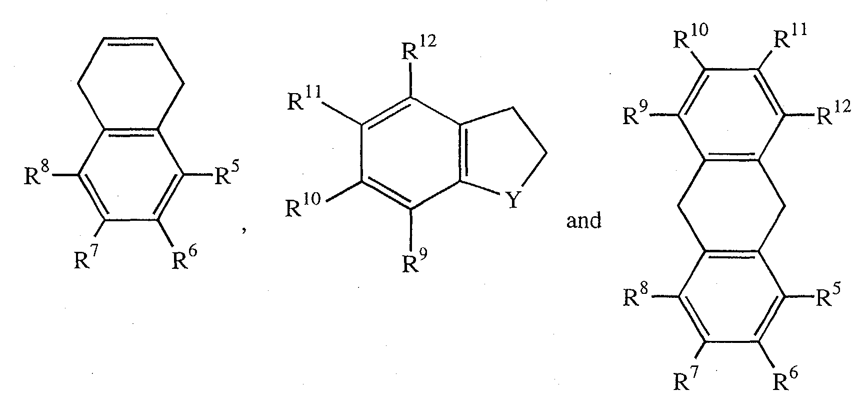 wherein Y is CH₂, NR¹³ or O; and R⁵, R⁶, R⁷, R⁸, R⁹, R¹⁰, R¹¹, R¹² and R¹³ independently are selected from hydrogen, halo, cyano, nitro and organic functional groups.

3. The method of claim 2 in which the Ar-N= substituent has formula (I) 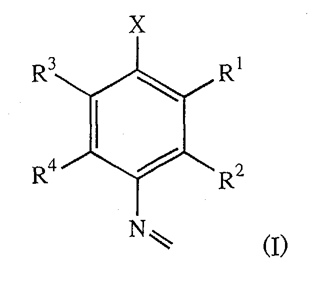 wherein X is amino, substituted amino, hydroxy or alkoxy; and R¹, R², R³ and R⁴ independently are selected from hydrogen, amino, hydroxy, halo and organic functional groups.

4. The method of claim 3 in which said at least one dye is selected from among 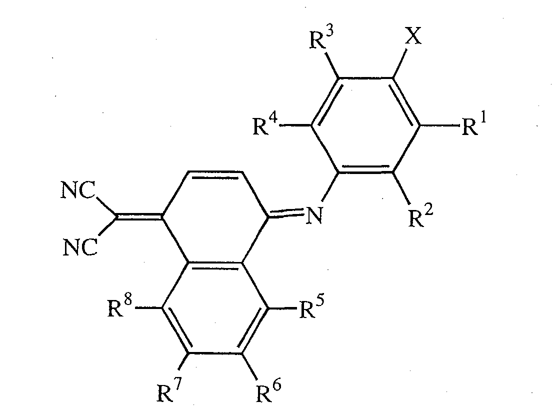 and 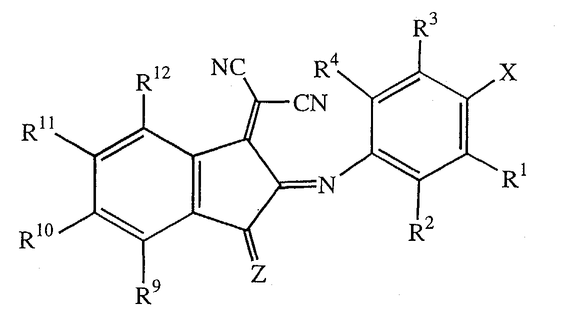 wherein Z represents O or C(CN)₂.

5. The method of claim 4 in which R¹, R², R³, R⁴ independently are hydrogen, alkyl, halo, amino, substituted amino, hydroxy or alkoxy; R⁵, R⁶, R⁷, R⁸, R⁹, R¹⁰, R¹¹ and R¹² independently are hydrogen, alkyl, halo, cyano or nitro; and X is NR¹⁴R¹⁵, wherein R¹⁴ and R¹⁵ independently are hydrogen or alkyl.

6. The method of claim 5 in which Z represents C(CN)₂; R¹ and R³ are hydrogen; and R⁵, R⁶, R⁷, R⁸, R⁹, R¹⁰, R¹¹ and R¹² independently are hydrogen or alkyl.

7. The method of claim 1 in which said at least one dye has an absorption maximum in the range from 600 nm to 1000 nm.

8. The method of claim 7 in which each dye is present in an amount from 0.01 ppm to 2 ppm and has an absorption maximum from 700 nm to 1000 nm.

9. The method of claim 8 further comprising at least one dye having an absorption maximum from 500 nm to 700 nm.

10. The method of claim 8 in which at least two dyes are present, each of which has an absorption maximum from 700 nm to 1000 nm.
